Europäisches Patentamt

European Patent Office

Office européen des brevets

(19)

(11) Numéro de publication: **0 379 596**
**A1**

(12)

# DEMANDE DE BREVET EUROPEEN PUBLI E EN APPLICATION DE L'article 158, paragraphe 3 de la CBE

(21) Numéro de dépôt: **89908289.5**

(51) Int. Cl.⁵ **B23K 11/04**

(22) Date de dépôt: **15.06.89**

(86) Numéro de dépôt internationale :
**PCT/SU89/00162**

(87) Numéro de publication internationale :
**WO 89/12524 (28.12.89 89/30)**

(30) Priorité: **20.06.88 SU 4473982**

(43) Date de publication de la demande:
**01.08.90 Bulletin 90/31**

(84) Etats contractants désignés:
**AT DE FR GB IT SE**

(71) Demandeur: **INSTITUT ELEKTROSVARKI IMENI E.O.PATONA AKADEMII NAUK UKRAINSKOI SSR**
**ul. Bozhenko, 11**
**Kiev, 252650(SU)**

(72) Inventeur: **KUCHUK-YATSENKO, Sergei Ivanovich**
**pr. 40-letia Oktyabrya, 21-93**
**Kiev, 252039(SU)**
Inventeur: **KRIVENKO, Valery Georgievich**
**ul. Melnikova, 18-58**
**Kiev, 252050(SU)**
Inventeur: **KUZNETSOV, Petr Vasilievich**
**ul. Demeevskaya, 53-48**
**Kiev, 252109(SU)**
Inventeur: **BOGATYREV, Vladimir Jurievich**
**ul. Vasilkovskaya, 2a-244**
**Kiev, 252040(SU)**
Inventeur: **GOLOVCHENKO, Sergei Iosipovich**
**ul. Malokitaevskaya, 7-68**
**Kiev, 252027(SU)**
Inventeur: **IGNATENKO, Vadim Jurievich**
**ul. Boichenko, 13-45**
**Kiev, 252206(SU)**

(74) Mandataire: **Berger, Helmut et al**
**Cabinet Z. WEINSTEIN 20, avenue de Friedland**
**F-75008 Paris(FR)**

(54) **INSTALLATION POUR LE SOUDAGE PAR PRESSION DE PIECES CHAUFFEES PAR UN ARC SE DEPLACANT DANS UN CHAMP MAGNETIQUE.**

(57) La machine comporte deux dispositifs de serrage (2, 3) dont un premier est immobile sur un bâti (1) et l'autre est placé sur des barres (7), dont certains des bouts sont fixés à des cylindres hydrauliques de refoulement (6) avec possibilité d'un mouvement de va-et-vient. Chaque dispositif de serrage (2, 3) comporte une base (5) et un couvercle (8) articulé par rapport à cette base et déplacé par un cylindre dont le corps (25) est articulé à la base (5) et la tige (26), au couvercle (8), avec lequel, lors du serrage des pièces (4), coopère un galet de serrage (14).

La machine comporte également un verrou (15) réalisé sous la forme d'un levier en L, un dispositif (35) pour corriger la coaxialité des pièces à souder et un dispositif (19) pour prérégler l'entrefer de service réalisé sous la forme d'un plongeur (20) et d'une butée réglable (21) montés coaxialement.

FIG.1

FIG.3

"Machine à souder les pièces par pression avec chauffage à l'arc se déplaçant dans un champ magnétique".

Domaine de l'invention

La présente invention concerne les machines de soudage par pression et plus particulièrement une machine de soudage par pression avec chauffage à l'arc qui se déplace dans un champ magnétique.

Etat de la technique

Un problème particulier au soudage des tubes de faible diamètre qui ne peuvent pas être tournés lors du soudage, par exemple, lors de la pose des conduits, est d'assurer une qualité stable des joints soudés avec un haut rendement du processus. A l'heure actuelle, le soudage des tubes de faible diamètre se fait essentiellement à la main avec utilisation d'électrodes enduites ou dans un milieu de gaz inertes. La qualité des joints soudés dépend essentiellement de la qualification du soudeur, de la qualité des matériaux et des conditions de soudage.

Afin d'éviter les erreurs inhérentes au soudage manuel à l'arc, on utilise parfois des machines à souder orbitales à commande par microprocesseur. Dans ce cas, on observe une amélioration de la qualité des joints soudés et l'augmentation du rendement, mais on observe également un accroissement notable du coût de l'équipement de soudage, plus les exigences de qualification du personnel deviennent sévères et de plus, apparaissent des prescriptions limitratrices déterminées concernant les conditions d'exploitation (température, humidité et pureté de l'air).

Pour souder les tubes de faible diamètre, ainsi que de petites pièces à profil complexe, on utilise des machines à souder à l'arc se déplaçant dans un champ magnétique. Ces machines assurent une bonne qualité des joints soudés, mais ne peuvent être utilisées essentiellement que dans des ateliers à cause de grandes dimensions de ces machines.

Ainsi, il existe une machine à souder par pression à l'arc tournant dans un champ magnétique qui peut être utilisée pour le soudage dans un atelier (prospectus de la société ouest-allemande KUKA "KUKA MAGNETARC") qui comporte un bâti sur lequel sont montés des fixateurs du type à cartouche disposés sur des guides et actionnés par des cylindres hydrauliques de refoulement. Sur le bâti sont également placés des pompes à huile, un système de commande, des manipulateurs de chargement automatique et de déchargement automatique des pièces ainsi que d'autres équipements;

Une telle machine est destinée au soudage de pièces bien déterminées. Par exemple, des cardans, des embouts et des autres pièces à profil complexe.

Il existe également une autre machine à souder par pression à l'arc tournant dans un champ magnétique (MBL-Schweisstechnik. Geräte. Vorrichtungen. Anwendungsbeispiele, n° 126, p. 7) sur le bâti de laquelle, sont placés des guides avec des dispositifs de serrage disposés sur ces guides dont l'un est fixé et l'autre peut se déplacer dans le sens axial. Chaque dispositif de serrage présente la forme de deux mors dont l'un peut se déplacer radialement lors du chargement et du déchargement des pièces.

Une telle machine utilisée dans les ateliers permet de souder tant les pièces longues que les pièces de petite taille, mais il est pratiquement impossible de travailler avec cette machine très encombrante sur un chantier.

Pour travailler sur des chantiers, on a prévu une machine à souder des pièces par pression à l'arc se déplaçant dans un champ magnétique (SU, A, 1207684) qui comporte deux dispositifs de serrage pour placer les pièces à souder, dans lequel un couvercle est articulé sur une base et est muni d'un dispositif pour son déplacement par rapport à la base, ainsi qu'un cylindre hydraulique de serrage dont le corps est monté sur une tige articulée de la base à l'aide de tringles auxquelles est fixé un galet de serrage, disposé du côté du couvercle qui est en position par rapport à son articulation qui le relie à la base et qui coopère avec cette dernière lors du serrage des pièces à souder, deux cylindres hydrauliques de refoulement fixés à la base du premier dispositif de serrage monté fixe, alors que le deuxième dispositif de serrage est monté par sa base sur des barres dont certains des bouts sont fixés aux cylindres hydrauliques de refoulement avec possibilité d'un mouvement de va-et-vient et deux dispositifs de préréglage de l'intervalle de travail entre les bouts des pièces à souder couplées cinématiquement aux cylindres hydrauliques de refoulement.

Les barres portant le deuxième dispositif de serrage sont fixées en porte-à-faux ce qui n'assure pas la rigidité de la structure de sorte que lors du soudage de pièces apparaissent de grands efforts de flexion qui entraînent la perturbation de la coaxialité des pièces disposées dans les dispositifs de serrage. C'est pourquoi la qualité des joints soudés ne répond pas toujours aux prescriptions.

Dans cette machine connue, chaque dispositif de déplacement du couvercle par rapport à la base est réalisé sous la forme d'un levier fixé au galet de serrage avec un premier galet relié par un câble à un second galet monté sur le couvercle à l'endroit de son articulation le reliant à la base. L'ouverture et la fermeture du couvercle sont faites manuellement par un opérateur. Lors du déplacement du levier par l'opérateur et, dont du mouvement du galet de serrage avec tringles, le premier galet tourne en enroulant ou en déroulant un câble.

Une telle opération exige un travail énorme et son rendement est faible, en outre, le câble reliant les galets est rapidement détérioré ce qui oblige à arrêter la machine pour effectuer la réparation.

Chaque dispositif pour le préréglage de l'intervalle de travail entre les bouts des pièces à souder se présente, dans la machine connue, sous la forme de montées dans le cylindre hydraulique de refoulement, d'une butée réglable et d'une douille à ressort montée et reliée au piston dudit cylindre qui travaille et coopére avec ledit corps.

L'intervalle de travail entre les bouts des pièces à souder est préréglé de la façon suivante. Tout d'abord on amène l'huile sous basse pression dans la cavité côté piston du cylindre hydraulique de refoulement, et le piston se déplaçant alors jusqu'à la butée de la douille à ressort contre le corps du cylindre hydraulique. Ensuite, dans la même cavité est amenée l'huile sous une forte pression afin de déplacer le piston et de comprimer le ressort et aussi de déplacer le deuxième dispositif de serrage jusqu'à son intéraction avec la butée réglable en assurant ainsi le préréglage de l'intervalle de travail entre les bouts des pièces à souder.

Une telle réalisation du dispositif n'assure pas le maintien d'une valeur précise de l'intervalle de travail entre les bouts des pièces à souder parce que l'effort transmis au ressort dépend de la pression de l'huile dans le circuit qui peut varier durant le soudage. La modification de la valeur de l'interstice de travail peut provoquer un court-circuit ou une rupture de l'arc se déplaçant dans l'entrefer ce qui diminue la qualité du joint soudé.

Exposé de l'invention

L'invention vise à créer une machine à souder des pièces par pression avec chauffage à l'arc qui se déplace dans un champ magnétique, dans laquelle la structure du dispositif de déplacement d'un couvercle par rapport à une base et d'un dispositif de préréglage de l'intervalle de travail entre les bouts des pièces à souder, ainsi que l'augmentation de la rigidité de la structure de la machine et l'introduction de mécanismes auxiliaires permettraient d'élever la qualité des joints soudés et le rendement, ainsi que de faciliter la conduite et de l'entretien de la machine.

Le problème ainsi posé est résolu à l'aide d'une machine à souder les pièces par pression avec chauffage à l'arc se déplaçant dans un champ magnétique qui comporte deux dispositifs de serrage pour y fixer les pièces à souder et dont chacun comporte un couvercle articulé à une base et est muni d'un mécanisme de déplacement du couvercle par rapport à la base, ainsi qu'un cylindre hydraulique de serrage dont le corps monté sur la base est articulé par sa tige à des tringles auxquelles est fixé un galet de serrage disposé du côté du couvercle de manière à être opposé à l'emplacement de l'articulation le reliant à la base et travaillant en intéraction avec elle lors du serrage des pièces à souder, deux cylindres hydrauliques de refoulement fixés à la base du premier dispositif de serrage fixe, alors que le deuxième dispositif de serrage s'appuie par sa base sur des barres dont certains des embouts sont fixés aux cylindres hydrauliques de refoulement avec possibilité de réaliser des mouvements de va-et-vient et deux dispositifs de préréglage de l'intervalle de travail entre les bouts des pièces à souder couplés cinématiquement aux cylindres hydrauliques de refoulement, conformément à l'invention, cette machine comporte un bâti à l'une des extrémités duquel est monté un premier dispositif de serrage et à l'autre extrémité, c'est-à-dire les autres extrémités des barres, sont montés deux verrous réalisés chacun en forme de levier en L, fixés par articulation à la base du premier ou du deuxième dispositif de serrage du côté opposé à l'articulation la reliant au couvercle, ces leviers coopérant par un bout avec le galet de serrage et par l'autre bout avec le couvercle, alors que chaque mécanisme de déplacement du couvercle par rapport au corps est réalisé en forme de cylindre hydraulique dont le corps est articulé à la base et la tige et est relié au couvercle, du côté opposé à l'emplacement de l'articulation reliant le couvercle à la base, ledit dispositif de préréglage de l'interstice de travail entre les bouts des pièces à souder étant réalisé sous la forme d'un plongeur monté sur la base du côté des autres extrémités des barres, et d'une butée réglable montée sur la base du deuxième dispositif de serrage, coaxialement au plongeur.

Il est souhaitable de munir la machine d'un dispositif de correction de la coaxialité des pièces à souder qui est monté dans la base du deuxième dispositif de serrage.

Il est utile que la barre disposée dans la base, du côté opposé à son articulation au couvercle, soit montée avec un jeu par rapport à la base et possède un orifice, et que de plus le dispositif de correction de la coaxialité des pièces à souder se présente sous la forme d'une tringle dont l'un des bouts est relié par un filetage à la base et l'autre bout est mis dans l'orifice de la barre de façon à être rigidement fixé à cette dernière.

La machine à souder les pièces par pression avec chauffage à l'arc se déplaçant dans un champ magnétique revendiquée assure une haute qualité des joints soudés grâce à une structure rigide qui exclut la non-coaxialité des pièces à souder. Même dans le cas d'une utilisation des pièces dont les dimensions transversales diffèrent quelque peu, on peut corriger la coaxialité des pièces, ce qui ne diminue pas la qualité des pièces à souder et élimine pratiquement les rebuts.

Dans cette machine on maintient un intervalle de travail constant entre les bouts des pièces à souder, ce qui contribue également à l'obtention de joints soudés d'une haute qualité.

La machine peut être utilisée tant dans des ateliers que sur des chantiers, le processus de serrage se faisant automatiquement ce qui exclut les opérations manuelles difficiles et élève le rendement du soudage.

Brève description des dessins

L'invention ressortira de la description qui suit d'un exemple concret d'exécution schématisé se référant aux dessins annexés dans lesquels :

La figure 1 représente une vue d'ensemble d'une machine à souder des pièces par pression avec chauffage à l'arc selon l'invention et se déplaçant dans un champ magnétique.

La figure 2 tout comme la figure 1 est une vue en plan avec coupe partielle suivant un cylindre hydraulique de refoulement, d'un bâti aux endroits où est montée l'extrémité d'une barre et l'extrémité d'un plongeur, selon l'invention.

La figure 3 représente une coupe suivant la ligne III-III de la figure 1, selon l'invention.

Meilleur mode de réalisation de l'invention

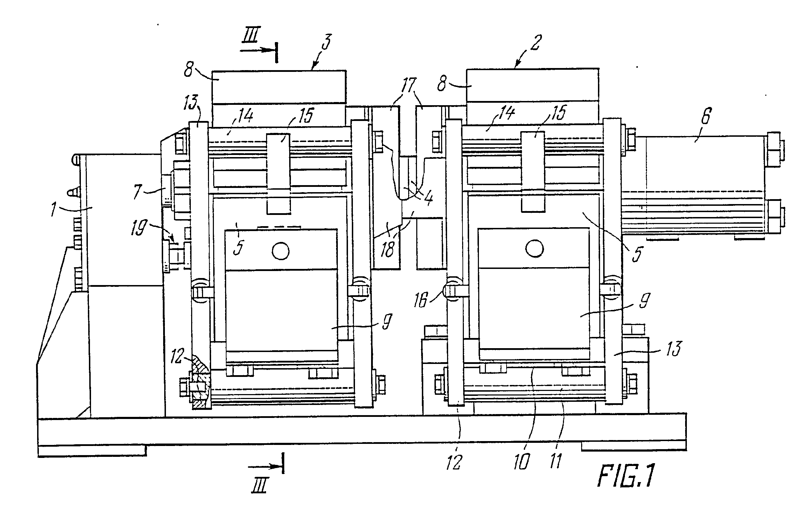

La machine à souder des pièces par pression avec chauffage à l'arc se déplaçant dans un champ magnétique comporte un bâti 1 (figure 1), deux dispositifs de serrage 2, 3 pour serrer des pièces 4 à souder, la base 5 d'un premier desquels étant immobilisée par rapport au bâti 1.

Deux cylindres hydrauliques de refoulement 6 sur lesquels sont fixés à la base 5 par leurs extrémités, deux barres 7 avec possibilité d'un mouvement de va-et-vient. Les autres extrémités des barres 7 sont fixées dans les évidements du bâti 1, du côté opposé. Ainsi, le bâti 1 réunissant les dispositifs de serrage 2, 3 et les barres 7 rend la machine rigide ce qui aide à maintenir la coaxialité des pièces 4 installées, même si celles-ci ont une longueur importante.

Chaque dispositif de serrage 2, 3 comporte un couvercle 8 articulé sur la base 5 dans laquelle est monté un cylindre hydraulique de serrage 9 dont la tige 10 supporte y fixée une plaque 11 reliée par une articulation 12 à des tringles 13 qui sont reliées à un rouleau de serrage 14. Chaque base 5 supporte y fixé un verrou 15 réalisé en forme de levier en L. Les tringles 13 sont reliées à la base 5 par des ressorts 16. Les dispositifs de serrage 2, 3 supportent y fixés des aimants 17 (permanents ou électro-aimants) disposés à proximité des bouts des pièces à souder 4.

Aux bases 5 des dispositifs de serrage 2, 3, dans la zone de dispositif des bouts des pièces à souder 4, sont fixées des gaînes 18 de protection contre les étincelles apparaissant lors du soudage sur les barres 7.

La machine comporte également deux dispositifs pour prérégler l'intervalle de travail entre les bouts des pièces à souder couplés cinématiquement aux cylindres hydrauliques de refoulement 6.

La machine est représentée en position avant le commencement du soudage.

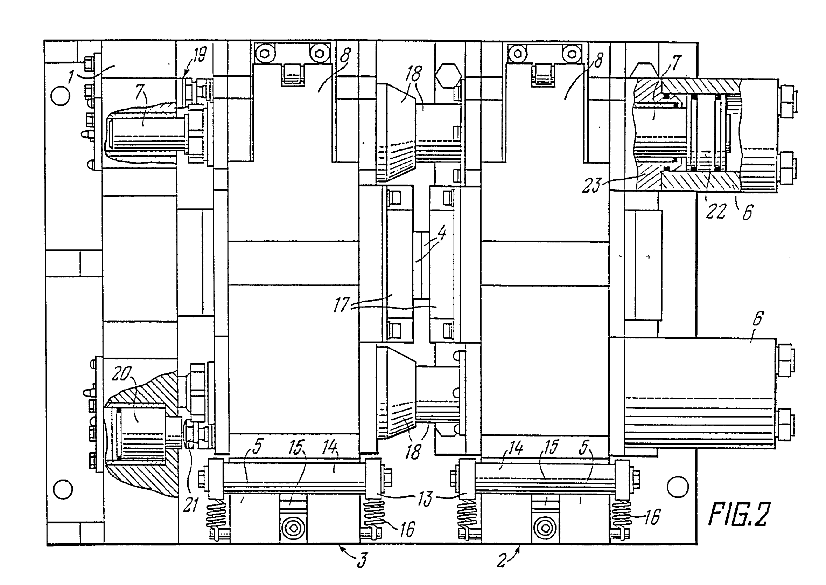

Chaque dispositif 19 de préréglage de l'interstice de travail comporte, disposés coaxialement, un plongeur 20 (figure 2) placé dans un alésage du bâti 1, du côté des autres extrémités des barres 7, et une butée réglable 21 présentant la forme d'un boulon à tête sphérique et coopérant avec le plongeur 20. Par sa partie filetée, le boulon est relié à la base 5 du dispositif de serrage 3. Le dispositif 19 de préréglage de l'interstice de travail est relié au piston 22 du cylindre hydraulique 6 de refoulement à l'aide de la barre 7 servant de tige audit piston.

Chaque cylindre hydraulique de refoulement 6 est muni d'un couvercle 23 placé du côté de sa tige.

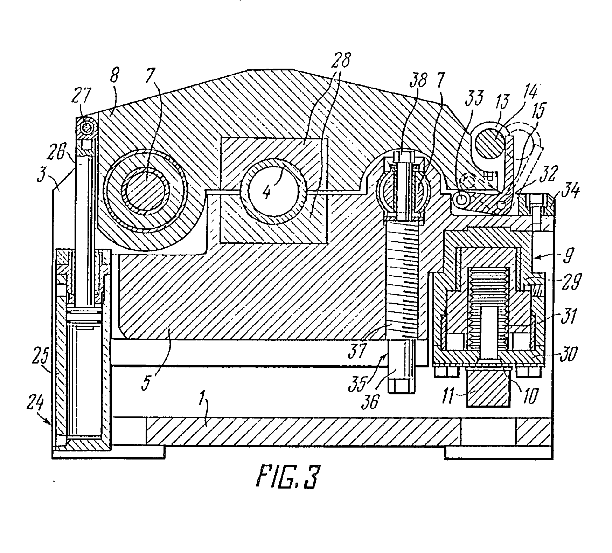

Chaque dispositif de serrage 2, 3 comporte un mécanisme 24 (figure 3) pour déplacer le couvercle par rapport à la base, réalisé en forme de cylindre hydraulique dont le corps 25 est articulé à la base 5 et à la tige 26 qui est reliée au couvercle 8, du côté de sa liaison par articulation à la base 5, à l'aide d'une articulation 27, dont l'axe coïncide avec l'axe de l'une des barres 7.

Le couvercle 8 et la base 5 comportent deux mors de serrage 28 adjacents et dans lesquels sont mises des pièces 4 à souder. Lors du soudage d'un lot de pièces 4 de type et de dimension différents, les mors 28 sont remplacés par d'autres qui correspondent au diamètre extérieur des pièces 4.

Dans le mode de réalisation décrit, des cylindres hydrauliques de serrage 9 du type à plongeur sont utilisés. Un corps 29 de chacun de ceux-ci est monté dans la base 5 des dispositifs de serrage 2,3. Un couvercle 30, un ressort 31 en plateau et la tige 10 sont montés sur le corps 29.

Le verrou 15 ayant la forme d'un levier en L est fixé par une articulation 32 à la base 5 des dispositifs de serrage 2, 3, du côté opposé à la liaison par articulation de la base 5 au couvercle 8. Un bout du levier en L comporte un galet 33 à l'aide duquel le levier coopère avec la saillie du couvercle 8 lors de sa fermeture. L'autre bout du levier coopère avec le galet de serrage 14. Le dessin représente schématiquement (en pointillés) la position extrême du verrou 15 lors de l'ouverture et lors de la fermeture du couvercle 8 qui est limitée par une butée 34 fixée à la base 5.

La machine est munie d'un dispositif 35 pour corriger la coaxialité des pièces à souder et qui se présente sous la forme d'une tringle 36 avec un filetage 37 à un bout pour la fixation de celle-ci à la base 5 du dispositif de serrage 3. L'autre bout de la tringle 36 de section transversale moindre est rigidement fixé par un écrou 38 à la barre 7 disposée dans la base 5, du côté opposé à l'articulation reliant le couvercle 8 à la base 5. Cette barre 7 comporte un orifice dans lequel fait saillie la tringle 36.

Entre la barre 7 et la base 5 existe un jeu grâce auquel un déplacement de la base 5 par rapport à la barre 7 opposée est possible.

La source de courant de soudage, la pompe à huile et le système de commande peuvent être disposés en dehors de la machine et ne sont pas montrés sur les dessins.

La machine à souder les pièces par pression avec le chauffage à l'arc se déplaçant dans un champ magnétique fonctionne de la façon suivante.

La position initiale pour commencer le soudage est celle dans laquelle le dispositif 3 (figure 1) de serrage fixé aux barres 7 est placé par l'intermédiaire du cylindre hydraulique de refoulement 6 en position d'intéraction des butées réglables 21 (figure 2) placées sur sa base 5 avec les plongeurs 20. Dans chaque dispositif de serrage 2, 3 le galet de serrage 14 (figure 3) serre le couvercle 8 entre lequel et la base 5 sont immobilisées, à l'aide des mors 28, les pièces 4.

Pour mettre la machine en position initiale de soudage, on amène sous pression de travail l'huile dans les deux cavités (celle côté piston et celle côté tige) des cylindres hydrauliques de refoulement 6 (figure 2). Le piston 22 des cylindres hydrauliques de refoulement 6 se déplace vers le couvercle 23 en déplaçant les barres 7 et, fixé sur celles-ci, le dispositif de serrage 3 est amené en contact avec les butées 21, disposées sur la base 5 du dispositif de serrage 3, ainsi que les plongeurs 20.

Les plongeurs 20 se trouvent constamment sous pression de travail de l'huile durant le fonctionnement de la machine. L'effort créé par le cylindre hydraulique de refoulement 6, par suite de la différence de pression dans les cavités côté piston et côté tige, est inférieur à celui créé par le plongeur 20. Entre le couvercle 23 et le piston 22 du cylindre hydraulique de refoulement 6 il existe un jeu qui peut être modifié en vissant ou en dévissant la butée réglable 21.

Ensuite, sur les mors de serrage 28 (figure 3), à l'aide d'un mécanisme d'alimentation en pièces (non représenté sur le dessin), sont coaxialement placées les pièces 4 de façon que leurs bouts se trouvent entre les aimants 17 (figures 1, 2) en contact l'un avec l'autre. Après cela, on amène l'huile dans la cavité du côté du piston du cylindre hydraulique 24 (figure 3) pour déplacer le couvercle par rapport à la base, lequel, par sa tige 26 reliée au couvercle 8 par une articulation 27, descend jusqu'à la position dans laquelle les mors 28 entrent en contact avec les pièces 4.

Le couvercle 8 presse alors sur le galet 33 et, à travers lui, sur un bout du levier en L qui se trouve à une position extrême limitée par la butée 34 et qui commence à pivoter par rapport à l'articulation 31, et par son deuxième bout met le galet de serrage 14 en position de préserrage des pièces 4 (représentée sur le dessin par une ligne continue).

L'ouverture et la fermeture du couvercle 8 sous l'action du mécanisme 24 réalisé sous la forme d'un cylindre hydraulique et la mise du galet de serrage 14 en position de préserrage des pièces 4 ainsi que le mouvement inverse se font à l'aide du levier en L et automatiquement par amenée de l'huile dans la cavité côté piston ou dans celle côté tige du cylindre hydraulique. Ainsi, se trouvent éliminées les opérations manuelles difficiles ce qui améliore notablement le rendement de la machine.

Ensuite, l'huile est amenée dans le cylindre hydraulique de serrage 9 dont la tige 10 se déplace en comprimant le ressort 31 et en déplaçant le galet de serrage 14 jusqu'à son contact avec le couvercle 8, par l'intermédiaire de tringles 13 et de la plaque 11 tournant par rapport à l'articulation 12.

Ainsi, les pièces à souder 14 sont coaxialement placées dans les dispositifs de serrage 2, 3 et la machine est mise en position de soudage des pièces 4 : à cet effet, on applique aux dispositifs de serrage 2, 3 une tension produite par une source de courant de soudage. Ensuite, la pression d'huile est supprimée dans les cavités à tige des cylindres hydrauliques de refoulement 6. L'effort créé par les cylindres hydrauliques de refoulement 6 devient alors supérieur à celui créé par les plongeurs 10 de sorte que les pistons 22 des cylindres hydrauliques de refoulement 6 se déplacent jusqu'à la butée contre le couvercle 23 en rattrapant le jeu existant. Ce jeu est affiché une fois pour un lot de pièces 4 du même calibre.

Les barres 7 se déplacent respectivement avec le dispositif 3 de serrage y fixé qui porte serrée l'une des pièces 4 à souder. Entre les pièces 4 à souder se trouvant auparavent en contact se forme un intervalle de travail dans lequel est formé un arc électrique.

La structure du dispositif 19 garantit la stabilité d'affichage de l'entrefer de service entre les bouts des pièces 4.

En même temps, on produit un champ magnétique à l'aide des aimants 17 (figure 1, 2). Par suite de l'intéraction du courant de l'arc et du champ magnétique, l'arc électrique se déplace sur le périmètre des bouts des pièces 4 en les portant à la température de déformation plastique.

Quelque temps après, on augmente par impulsion le courant ce qui fait fondre les abouts des pièces 4.

Après cela, on effectue le refoulement. A cet effet, on envoie l'huile dans les cavités côté tige des cylindres hydrauliques de refoulement 6 alors que dans leurs cavités côté piston, la pression est supprimée. Les barres 7, le dispositif 3 de serrage et l'une des pièces 4 se déplacent alors sur une distance supérieure à l'entrefer de service et assurent l'intéraction des pièces 4 à souder et leur déformation plastique nécessaire pour former la soudure. Les pièces 4 sont maintenues à cette position un temps déterminé. Durant ce temps on arrête la source de courant de soudage et les pièces 4 sont desserrées.

A cet effet, on élimine la pression dans le cylindre hydraulique de serrage 9 (figure 3). Le ressort 3 se desserre en déplaçant la tige 10 du cylindre hydraulique 9 jusqu'à la butée contre le corps 29. Le galet de serrage 14 revient en position de presserrage sous l'action des tringles 13 et de la plaque 11.

Ensuite, on amène l'huile dans la cavité du côté de la tige du cylindre hydraulique 25 pour déplacer le couvercle par l'intermédiaire de la tige 26 articulée au couvercle 8. On libère ainsi l'un des bouts du levier en L dont le second bout est en intéraction avec le galet de serrage 14. Le galet de serrage 14, à l'aide des tringles 13 reliées par les ressorts 16 (figure 2) à la base 5 des dispositifs de serrage 2, 3, est mis en position ou le levier en L (figure 3) entre en contact avec la butée 34 qui limite le déplacement du levier.

On décharge alors les pièces 4 soudées des dispositifs de serrage 2, 3 et la machine est prête pour le cycle suivant de soudage.

Si, avant le soudage, on observe que les pièces 4 mises dans les dispositifs de serrage 2, 3 ont une non-coaxialité due aux écarts de la forme des pièces 4 et aux tolérances de leurs dimensions géométriques, on peut éliminer ce défaut à l'aide du dispositif 35.

A cet effet, on tourne la tringle 36 du dispositif 35 pour corriger la coaxialité des pièces à souder, la base 5 du dispositif 3 de serrage se déplace par rapport à la barre 7 où est fixée la tringle 36 en rattrapant les jeux entre eux. Simultanément avec la base 5 du dispositif de serrage 3, on déplace en arc la pièce 4 par rapport à l'autre barre 7. Comme le rayon de l'arc est important, ce déplacement peut être considéré comme une correction linéaire de la coaxialité des pièces à souder 4 ce qui permet d'améliorer la qualité de la soudure même lors du soudage de pièces 4 dont les dimensions des sections transversales diffèrent un peu.

Ainsi, la machine revendiquée assure une haute qualité des soudures, a un haut rendement et peut être utilisée tant dans des ateliers que sur des chantiers, et permet de plus de souder de longues pièces.

Application industrielle

La présente invention peut être utilisée dans les différentes branches de construction mécanique, pour la fabrication de pièces creuses à périmètre fermé, ainsi que sur des chantiers, pour la pose des pipeline et gazoline et pour la fabrication d'éléments de construction. Il est avantageux d'utiliser la présente invention dans la construction d'automobiles et de tracteurs, pour la fabrication des cardans, des barres à réaction, des tubes d'échappement et des autres pièces, ainsi que dans la construction des chaudières pour la fabrication des tuyauteries de vapeur.

EP 0 379 596 A1

Revendications

1. Machine à souder les pièces sous pression avec chauffage à l'arc se déplaçant dans un champ magnétique du type comportant deux dispositifs de serrage (2, 3) pour y monter des pièces (4) à souder, dans chacun desquels un couvercle (8) est articulé à une base (5), et est muni d'un mécanisme (24) pour son déplacement par rapport à la base, alors qu'un cylindre hydraulique de serrage (9), dont le corps (29) est monté dans la base (5), est relié et articulé par sa tige (10) à des tringles (12) auxquelles est fixé un galet de serrage (14) disposé du côté du couvercle (8), en opposition à son articulation le reliant à la base (5), ledit galet coopérant avec ce dernier lors du serrage des pièces (4) à souder, deux cylindres hydrauliques de refoulement (6) fixés à la base (5) du premier dispositif de serrage (2) immobile, l'autre dispositif étant placé par sa base (5) sur des barres (7), dont des bouts sont fixés aux cylindres hydrauliques de refoulement (6) avec possibilité de mouvement de va-et-vient et deux dispositifs (19) pour prérégler l'interstice de travail entre les bouts des pièces (4) à souder qui sont cinématiquement couplés aux cylindres hydrauliques (6) de refoulement (6), caractérisée en ce qu'elle comporte un bâti (1) dont un bout comporte la base (5) du premier dispositif (2) de serrage et le bout opposé, d'autres bouts des barres (7), deux verrous (15) réalisés chacun en forme de levier en L articulé à la base (5) du premier ou du deuxième dispositif de serrage (2, 3) du côté opposé à l'articulation le reliant au couvercle (8), alors que chaque mécanisme (24) pour déplacer le couvercle (8) par rapport au corps est réalisé en forme de cylindre hydraulique dont le corps (25) est articulé à la base (5) et la tige (26) qui est reliée au couvercle (8) du côté de son articulation le reliant à la base (5) ; chaque dispositif (19) de préréglage de l'interstice de travail entre les bouts des pièces (4) à souder est réalisé en forme de plongeur (20) placé sur le bâti (1) du côté des autres bouts des barres (7), et d'une butée réglable (21) placée sur la base (5) de l'autre dispositif de serrage (3), coaxialement au plongeur (20).

2. Machine selon la revendication 1, caractérisée en ce qu'elle comporte un dispositif (35) pour corriger la coaxialité des pièces à souder abrité par la base (5) du deuxième dispositif (3) de serrage.

3. Machine selon la revendication 2, caractérisée en ce que la barre (7) disposée dans la base (5) du côté opposé à son articulation la reliant au couvercle (8) est installée avec un jeu par rapport à la base (5) et présente un orifice, alors que le dispositif (35) pour corriger la coaxialité des pièces à souder se présente sous la forme d'une tringle (36) dont un bout fileté est relié à la base (5) et l'autre est disposé dans l'orifice de la barre (7) et y est rigidement fixé.

FIG.1

EP 0 379 596 A1

FIG.2

FIG.3

# INTERNATIONAL SEARCH REPORT

International Application No PCT/SU 89/00162

## I. CLASSIFICATION OF SUBJECT MATTER (if several classification symbols apply, indicate all) *

According to International Patent Classification (IPC) or to both National Classification and IPC

IPC$^4$  B23K 11/04

## II. FIELDS SEARCHED

### Minimum Documentation Searched [7]

| Classification System | Classification Symbols |
|---|---|
| IPC$^4$ | B23K 11/00,11/04,9/08 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | SU, A1, 1207684 (Institut elektrosvarki im E.O. Patona)  30 January 1986 (30.01.86) | 1-3 |
| A | US, A, 4052585 (VITALY ALEXANDROVICH SIDYAKIN et al.) 04 October 1977 (04.10.77)<br><br>&, GB, 1478260<br>SU, 539708<br>JP, 54-6017 | 1-3 |
| A | US, A, 3937916 (WELDING RESEARCH , INC.) 10 February 1976 (10.02.76)<br><br>&, FR, 2279507,  &, DE, 2538291<br>GB, 1475450,  JP, 52-32851 | 1-3 |
| A | GB, B, 1109598 (VSESOJUZNY NAUCHNO-ISSELE-DOVATELSKY INSTITUT ELEKTROSVAROCHNOGO OBORUDOVANIA) 10 April 1968 (10.04.68)<br><br>&  SU, 238043<br>DE, 1565915 | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 24 August 1989 (24.08.89) | 02 October 1989 (02.10.89) |
| International Searching Authority<br><br>ISA/SU | Signature of Authorized Officer |

Form PCT/ISA/210 (second sheet) (January 1985)